# EUROPEAN PATENT SPECIFICATION

(11) **EP 3 786 329 B1**
(45) Date of publication and mention of the grant of the patent: **09.11.2022**
(21) Application number: 20194059.0
(22) Date of filing: 02.09.2020
(51) Int. Cl.: D04H 3/16, D04H 3/007, D01F 1/10, D01F 6/06, C08J 3/22

(54) **PLANT-BASED FUNCTIONAL POLYPROPYLENE SPUNBOND NON-WOVEN FABRIC AND PREPARATION METHOD THEREOF**
FUNKTIONELLER POLYPROPYLENSPINNVLIESSTOFF AUF PFLANZLICHER BASIS UND VERFAHREN ZU SEINER HERSTELLUNG
NON-TISSÉ FILÉ-LIÉ EN POLYPROPYLÈNE FONCTIONNEL À BASE DE PLANTES ET SON PROCÉDÉ DE PRÉPARATION

(30) Priority: 02.09.2019 CN 201910822105
(43) Date of publication of application: 03.03.2021
(73) Proprietor: Bestee Material (Qingdao) Co., Ltd., Qingdao, Shandong 266000 (CN); Sinotech Academy of Textile (Qingdao) Co., Ltd., Qingdao, Shandong 266000 (CN); Qingdao Byherb New Material Co., Ltd., Qingdao, Shandong (CN); Herbspring Bigbio Technology (Qingdao) Co., Ltd., Qingdao, Shandong (CN)
(72) Inventor: HUANG, Xiaohua, Qingdao city, Shandong (CN); HUANG, Xiaoxian, Qingdao city, Shandong (CN); LIU, Yu, Qingdao city, Shandong (CN); LIU, Jie, Qingdao city, Shandong (CN); HUANG, Xiaolong, Qingdao city, Shandong (CN); ZHEN, Li, Qingdao city, Shandong (CN)
(74) Representative: Patentanwälte Gierlich & Pischitzis Partnerschaft mbB

(56) References cited:
- EP-A2- 1 710 346
- US-A1- 2012 215 148
- DATABASE WPI Week 201623 Thomson Scientific, London, GB; AN 2016-06662A XP002801564, & CN 105 239 201 A (LU S) 13 January 2016 (2016-01-13)
- DATABASE WPI Week 201951 Thomson Scientific, London, GB; AN 2019-464087 XP002801565, & CN 109 763 191 A (ZHONGKE TEXTILE RES INST QINGDAO CO LTD) 17 May 2019 (2019-05-17)

## Description

### TECHNICAL FIELD

The disclosure relates to the technical field of non-woven fabrics, and particularly to a plant functional PP spunbonded non-woven fabric and a preparation method thereof.

### BACKGROUND

APP spunbonded non-woven fabric is of an air-permeable but not water-permeable fiber structure formed by using a polypropylene raw material and through high-temperature spraying and combing via a device. It is mainly used for disposable medical and health products, disposable antifouling clothing, agricultural cloth, furniture cloth, lining materials and the like. The surface layer of the existing PP spunbonded non-woven medical and health product is mostly perforated membrane, hot air non-woven fabric and pure cotton spunlaced non-woven fabric.

Because the current spunbonded non-woven fabrics are all synthetic fiber products such as PET or PP, the non-woven fabric product has poor moisture absorption and low moisture regain. For the moisture regain of the polyester fiber products with a little water absorption effect, its moisture regain does not exceed 1%. Therefore, the poor moisture absorption of the synthetic fiber non-woven fabric limits the application range; at the same time, the raw materials of the spunbonded non-woven fabric determine the dryness, hardness and roughness characteristics of the non-woven fabric.

The Chinese patent CN108560149A relates to a processing process of a high-performance antibacterial polypropylene fiber non-woven fabric and belongs to the technical field of non-woven fabric processing. The process comprises the following steps: (1) preparation of carboxylated polypropylene, (2) antibacterial modification of polypropylene, (3) processing of a fiber web, and (4) formation of non-woven fabrics. The polypropylene spunbonded non-woven fabric prepared in the disclosure has not only remarkable antibacterial performance, but also stable antibacterial performance and long antibacterial time; moreover, the prepared polypropylene spunbonded non-woven fabric has high mechanical strength, good air permeability and no toxicity and harmlessness to human body, and is suitable for processing and manufacturing surgical clothes, bed sheets, urine mats, isolation clothes, visiting clothes and other medical and health products. This patent mainly solves the technical problem of polypropylene fiber antibiosis.

The Chinese patent CN109642378A discloses a spunbonded non-woven fabric provided by the disclosure. Its surface is smooth and rarely curled in the width direction due to the difference between the back surfaces of the surface. In addition, it has excellent membrane producing property, namely, the resin solution does not generate bleed-through and membrane

substance stripping due to excessive penetration when casting the resin solution, and the membrane does not generate homogenization, pinholes and other defects due to fluff of a support, and also has firm membrane adhesion, namely, the membrane substance is not stripped after being produced. This patent mainly solves the technical problems of surface curling and film adhesion of non-woven fabrics, but does not solve the technical problems of air permeability, low moisture regain and rough hand feeling of the existing spunbonded non-woven fabrics.

EP1710346 A2 also seeks to partly address the same objective problem as the present application, namely how to improve the moisture regain of a polypropylene spunbonded nonwoven, without adversely affecting tensile strength. EP1710346 A2 discloses treating the spunbond fibres with a hydrophilic coating. However, it does not disclose that the nonwoven comprises 0.2-1.5 wt. % water-soluble plant extract. Neither does it disclose that the fibres include a water-soluble extract, a modifier and an antioxidant.

Therefore, in order to solve the above technical problems, it is urgent to develop a PP spunbonded non-woven fabric having air permeability, moisture absorption, super softness and smoothness.

### SUMMARY

In order to solve the above technical problems, the object of the disclosure is to provide a plant functional PP spunbonded non-woven fabric and a preparation method thereof.

In order to realize the above object, the disclosure is realized through the following technical solution:

Provided is a plant functional PP spunbonded non-woven fabric, wherein the PP spunbonded non-woven fabric contains 0.2-1.5% of plant herbal water-soluble extract. The herbal water-soluble extract component is an impurity for pp, so if its content is too high, the dispersion becomes poor, a spinneret plate is more easily blocked or wires are more easy to break; furthermore, strength is influenced, preferably, 0.2-1.5%.

The plant functional PP spunbonded non-woven fabric has moisture regain of 0.2-3%, longitudinal breaking strength of ≥18.5N/5cm when tensile elongation is 5%; horizontal breaking force of ≤9.5N/5cm. The PP fiber non-woven fabric which is prepared by the disclosure and whose longitudinal and horizontal strength ratio is >1.95 has better soft and smooth performances.

### The disclosure also provides a method for preparing a plant functional PP spunbonded non-woven fabric, comprising the following steps:

### Step 1, modification and preparation of PP masterbatches:

heating polypropylene resin to be molten at the temperature of 195~220°C, first adding an antioxidant in the molten polypropylene resin, stirring for 10-15 min at the rotation speed of 800-1000 rad/min so that various components are sufficiently and uniformly mixed, then adding a modifier and a water-soluble plant extract, uniformly mixing, cooling to 180-190°C, and mixing for 20-40 min at a high speed to obtain a mixed material; and finally extruding and pelleting to obtain the plant functional polypropylene masterbatches;
The water-soluble extract is a polyphenol plant extract, which is one or more of honeysuckle extract, mint extract, mugwort extract, Echinacea polyphenol, apple extract, rose extract, grass coral extract, raspberry extract, mulberry extract, cinnamon extract, ginger extract, angelica extract and the like.

The antioxidant comprises dihydrotanshinone I, epicatechin and glycerinum; the mass ratio of dihydrotanshinone I to epicatechin to glycerinum in the antioxidant is 1-5: 1-3: 3-10; the mainly function of the antioxidant is to prevent the discoloration of the water-soluble plant extract when being added into high-temperature polypropylene; in this step, in the melting process of polypropylene, the antioxidant is first added, then the modifier is added for the reasons that since the antioxidant is added in the initial stage, molten polypropylene fiber has stronger antioxidation resistance, when the water-soluble plant extract is added in the later, the high temperature discoloration of the plant extract can be prevented, and pattern color is prevented.

The modifier includes pancreatic bleaching T and cocoamidopropyl betaine; the mass ratio of pancreatic bleaching T to cocoamidopropyl betaine in the modifier is 0.1-0.5:0.5-3;

The mass ratio of the modifier to the water-soluble plant extract is 0.1-0.5:8-10; under the condition of this ratio, the modification amount of the plant extract is basically met, and the cost can be controlled to a lower state.

The main function of the modifier is to make the added water-soluble plant extract have better dispersion and evenly disperse into polypropylene melt fluid; at the same time, the characteristics of cocoamidopropyl betaine after being mixed with the water-soluble plant extract at high temperature allow the prepared fiber to produce a microporous network structure, and render the prepared polypropylene fiber to have better moisture regain and moisture absorption characteristics.

### Step 2: mixing

The plant functional polypropylene masterbatches prepared in step 1 are mixed and molten with conventional polypropylene raw materials in accordance with a mass ratio of the soluble plant extract in the plant functional polypropylene masterbatches to total raw materials of 0.2-1.5%, so as to prepare spinning melt.

The addition amount of the soluble plant extract is 0.2-1.5% of the content of PP spunbonded non-woven fabric; the herbal water-soluble extract component belongs to the miscellaneous substance for PP, and if the content is too high, the dispersion will become poor, and blocking of the spinneret plate or break of the silk is easy to occur, and the strength is influenced, and therefore, 0.2-1.5% is preferred.

### Step 3: spinning and posttreatment

After the mixed raw materials prepared in step 2 are extruded and melted by a screw extruder, the melt is extruded from the spinning mouth by the spunbonded method. The diameter of the spinning mouth is 10 ~ 30 µm, and the PP fiber bundles are obtained;

the PP fiber bundles obtained in step 2 are pulled, netted with mesh curtain, rolling pressed, hot rolled, wound, rewound and cut-to-length, and finally the finished product is put into storage.

In the prepared plant functional PP spunbonded non-woven fabric, the thickness of PP fiber non-woven fabric is preferably 0.2-0.5 mm, the gram weight of the PP fiber non-woven fabric is preferably 20-40 g/m², and the diameter of the PP fiber is preferably 10-30 µm, and the softly modified fiber is matched, so that the prepared fabric can achieve better smooth characteristics.

The rolling press temperature is 140-165°C, the pressure is 56-70 d/cm, and the hot rolling temperature is 160-170°C; the plant functional PP spunbonded non-woven fabric is obtained by hot rolling with the knurling roller, wherein the hot rolling temperature is 160 ~ 175 °C.

In this way, the PP fiber non-woven fabric having longitudinal and horizontal breaking strength ratio of > 3.2, which can be prepared by combining with the entire process, has better softness and smoothness.

According to the preferred preparation method, the following steps need to be carried out after the traction is obtained in step 2: the fiber subjected to extraction is oiled; the oil agent comprises polyvinylpyrrolidone and emulsified silicone oil; the mass ratio of polyvinylpyrrolidone to emulsified silicone oil in the oil agent is 1-3:5-15; preferably 2:9, which can achieve better hand feeling and compliance.

The main function of the oil agent is to make the prepared polypropylene fiber more soft and smooth, and cannot generate burr feeling when being used for a long time.

### Compared with the prior art, the disclosure has the following advantages:

(1) The PP spunbonded non-woven fabric prepared by the disclosure contains 0.2-1.5% of plant herbal water-soluble extract. Without affecting the fiber strength, modification through addition of plant extracts allows the PP spunbonded non-woven fabric to have not only good plant function but also good moisture absorption and compliance.
(2) By adding the antioxidant, the problem of the fiber pattern color caused by discoloration of the water-soluble plant extract when being added into high-temperature polypropylene can be prevented.
(3) The antioxidant is added first and then the water-soluble plant extract is added; the antioxidant is added at the initial stage, so that the molten polypropylene fiber has stronger antioxidation performance. When the water-soluble plant extract is added in the later stage, the high-temperature discoloration of the plant extract can be better avoided, and pattern color is prevented
(4) By adding the modifier, the added water-soluble plant extract has better dispersion and is evenly dispersed into polypropylene molten fluid; meanwhile, the characteristic of cocoamidopropyl betaine which is mixed with the water-soluble plant extract at high temperature makes the prepared fiber produce the microporous network structure and makes the prepared polypropylene fiber and fabric have better moisture regain and moisture absorption characteristics. The moisture regain is 0.2-3%.
(5) The PP spunbonded non-woven fabric prepared by the disclosure has longitudinal breaking strength of ≥ 18.5N/5cm, longitudinal breaking force of ≤ 9.5N/5cm and longitudinal and transverse breaking strength ratio of ≥ 1.95, and the hand feeling is better; the thickness is preferably 0.2-0.5 mm, the gram weight is preferably 20-40 g/m², and the diameter of the PP fiber is 10-30 µm. The PP spunbonded non-woven fabric, as a whole, has better soft and smooth hand feeling.

### DESCRIPTION OF THE EMBODIMENTS

The disclosure will be further described in combination with embodiments.

### Example 1

A plant functional PP spunbonded non-woven fabric contained 0.2% of plant herbal water-soluble extract; the plant functional PP spunbonded non-woven fabric had 0.4% of moisture regain, 28.9 N/5cm of longitudinal breaking strength and 4.8 N/5cm of longitudinal breaking force. The PP spunbonded non-woven fabric in the prepared plant functional spunbonded non-woven fabric had the thickness of 0.2 mm, gram weight of 30 g/m² of and pp fiber diameter of 12µm.

### Example 2

A plant functional PP spunbonded non-woven fabric contained 0.6% of plant herbal water-soluble extract; the plant functional PP spunbonded non-woven fabric had 1.1% of moisture regain, 27.1 N/5cm of longitudinal breaking strength and 5.2 N/5cm of longitudinal breaking force. The PP spunbonded non-woven fabric in the prepared plant functional spunbonded non-woven fabric had the thickness of 0.3 mm, gram weight of 30g/m² and pp fiber diameter of 15 µm.

### Example 3

A plant functional PP spunbonded non-woven fabric contained 1% of plant herbal water-soluble extract; the plant functional PP spunbonded non-woven fabric has 1.6% of moisture regain, 26.5N/5cm of longitudinal breaking strength and 4.9 N/5cm of longitudinal breaking force. The PP spunbonded non-woven fabric in the prepared plant functional spunbonded non-woven fabric had the thickness of 0.2 mm, gram weight of 30g/m² and pp fiber diameter of 12 µm.

### Example 4

A plant functional PP spunbonded non-woven fabric contained 1.2% of plant herbal water-soluble extract; the plant functional PP spunbonded non-woven fabric has 2.0% of moisture regain, 26.0N/5cm of longitudinal breaking strength and 4.5N/5cm of longitudinal breaking force. The PP spunbonded non-woven fabric in the prepared plant functional spunbonded non-woven fabric had the thickness of 0.2 mm, gram weight of 30g/m² and pp fiber diameter of 10 µm.

### Example 5

A plant functional PP spunbonded non-woven fabric contained 1.5% of plant herbal water-soluble extract; the plant functional PP spunbonded non-woven fabric had 2.6% of moisture regain, 25.8N/5cm of longitudinal breaking strength and 4.2N/5cm of longitudinal breaking force. The PP spunbonded non-woven fabric in the prepared plant functional spunbonded non-woven fabric had thickness of 0.5 mm, gram weight of 30g/m² and pp fiber diameter of 20 µm.

### Example 6

A preparation method of a plant functional PP spunbonded non-woven fabric in example 1 comprises:

### Step 1, modification and preparation of plant functional PP masterbatches:

The polypropylene resin was heated to be molten at 200 °C. Firstly, an antioxidant was added into the molten polypropylene resin and stirred for 10-12 minutes at the rotation speed of 800 rad/min to fully mix various components. Then, the modifier and the water-soluble plant extract were added and uniformly mixed, then cooled to 185 ~ 190°C and mixed for 20 minutes at high speed to obtain the mixed material. Finally, extrusion and pelleting was carried out to obtain plant functional polypropylene masterbatches.

The antioxidant comprises dihydrotanshinone I, epicatechin and glycerinum; the mass ratio of dihydrotanshinone I to epicatechin to glycerinum in the antioxidant was 1:1:3; the modifier comprises pancreatic bleaching T and cocoamidopropyl betaine; the mass ratio of pancreatic bleaching T and cocoamidopropyl betaine in the modifier was 0.1:0.5; the mass ratio of the modifier to the water-soluble plant extract was 0.1:8.

### Step 2: mixing

The plant functional polypropylene masterbatches prepared in step 1 were mixed and molten with purchased polypropylene raw materials in accordance with a mass ratio of the soluble plant extract in the plant functional polypropylene masterbatches to total raw materials of 0.2%, so as to prepare spinning melt.

### Step 3: spinning and posttreatment

After the mixed raw materials prepared in step 2 were extruded and melted by a screw extruder, the melt was extruded from the spinning mouth by the spunbonded method. The diameter of the spinning mouth was 15 µm, and the PP fiber bundles were obtained;
the PP fiber bundle obtained in step 3 was pulled, netted with mesh curtain, rolling pressed, hot rolled, wound, rewound and cut-to-length, and finally the finished product was put into storage.

The fiber subjected to extraction was oiled: the oil agent comprised polyvinylpyrrolidone and emulsified silicone oil; the mass ratio of polyvinylpyrrolidone to emulsified silicone oil in the oil agent was 1:5.

The rolling press temperature was 140-165°C, the pressure was 56-60 d/cm, and the hot rolling temperature was 160-162°C;
mixed lapping was carried out to form the fiber layer, the plant functional PP spunbonded non-woven fabric was obtained by hot rolling with the knurling roller. The hot rolling temperature was 160 ~ 162 °C, and the PP fiber non-woven fabric having longitudinal and horizontal breaking strength ratio of 6.02 was obtained.

### Example 7

A preparation method of a plant functional PP spunbonded non-woven fabric in example 2 comprises:

### Step 1, modification and preparation of plant functional PP masterbatches:

The polypropylene resin was heated to be molten at 200 °C. Firstly, an antioxidant was added into the molten polypropylene resin and stirred for 10-12 minutes at the rotation speed of 800 rad/min to fully mix various components. Then, the modifier and the water-soluble plant extract were added and uniformly mixed, then cooled to 185 ~ 187°C and mixed for 20~25 minutes at high speed to obtain the mixed material. Finally, extrusion and pelleting was carried out to obtain plant functional polypropylene masterbatches.

The antioxidant comprises dihydrotanshinone I, epicatechin and glycerinum; the mass ratio of dihydrotanshinone I to epicatechin to glycerinum in the antioxidant was 2:1:3; the modifier comprises pancreatic bleaching T and cocoamidopropyl betaine; the mass ratio of pancreatic bleaching T to cocoamidopropyl betaine in the modifier was 0.1:1;
the mass ratio of the modifier to the water-soluble plant extract was 0.1:9.

### Step 2: mixing

The plant functional polypropylene masterbatches prepared in step 1 were mixed and molten with purchased polypropylene raw materials in accordance with a mass ratio of the soluble plant extract in the plant functional polypropylene masterbatches to total raw materials of 0.6%, so as to prepare spinning melt.

### Step 3: spinning and posttreatment

After the mixed raw materials prepared in step 2 were extruded and melted by a screw extruder, the melt was extruded from the spinning mouth by the spunbonded method. The diameter of the spinning mouth was 15 µm, and the PP fiber bundles were obtained;
the PP fiber bundle obtained in step 3 was pulled, netted with mesh curtain, rolling pressed, hot rolled, wound, rewound and cut-to-length, and finally the finished product was put into storage.

The fiber subjected to extraction was oiled: the oil agent comprises polyvinylpyrrolidone and emulsified silicone oil; the mass ratio of polyvinylpyrrolidone to emulsified silicone oil in the oil agent was 3:5.

The rolling press temperature was 150-155°C, the pressure was 56d/cm, and the hot rolling temperature was 160°C;
mixed lapping was carried out to form the fiber layer, the plant functional PP spunbonded non-woven fabric was obtained by hot rolling with the knurling roller. The hot rolling temperature was 160 ~ 168 °C, and the PP fiber non-woven fabric having longitudinal and horizontal breaking strength ratio of 5.21 was obtained.

### Example 8

A preparation method of a plant functional PP spunbonded non-woven fabric in example 3 comprises:

### Step 1, modification and preparation of plant functional PP masterbatches:

The polypropylene resin was heated to be molten at 210 °C. Firstly, an antioxidant was added into the molten polypropylene resin and stirred for 15 minutes at the rotation speed of 800 rad/min to fully mix various components. Then, the modifier and the water-soluble plant extract were added and uniformly mixed, then cooled to 190°C and mixed for 20 minutes at high speed to obtain the mixed material. Finally, extrusion and pelleting is carried out to obtain plant functional polypropylene masterbatches.

The antioxidant comprises dihydrotanshinone I, epicatechin and glycerinum; the mass ratio of dihydrotanshinone I to epicatechin to glycerinum in the antioxidant was 3:3:10; the modifier comprises pancreatic bleaching T and cocoamidopropyl betaine; the mass ratio of pancreatic bleaching T to cocoamidopropyl betaine in the modifier was 0.2:1;
the mass ratio of the modifier to the water-soluble plant extract was 0.3:8.

### Step 2: mixing

The plant functional polypropylene masterbatches prepared in step 1 were mixed and molten with purchased polypropylene raw materials in accordance with a mass ratio of the soluble plant extract in the plant functional polypropylene masterbatches to total raw materials of 1.0%, so as to prepare spinning melt.

### Step 3: spinning and posttreatment

After the mixed raw materials prepared in step 2 were extruded and melted by a screw extruder, the melt was extruded from the spinning mouth by the spunbonded method. The diameter of the spinning mouth was 12 µm, and the PP fiber bundles were obtained;
the PP fiber bundle obtained in step 3 was pulled, netted with mesh curtain, rolling pressed, hot rolled, wound, rewound and cut-to-length, and finally the finished product is put into storage.

The fiber subjected to extraction was oiled: the oil agent comprises polyvinylpyrrolidone and emulsified silicone oil; the mass ratio of polyvinylpyrrolidone to emulsified silicone oil in the oil agent was 3:7.

The rolling press temperature was 160°C, the pressure was 56d/cm, and the hot rolling temperature was 160°C;
mixed lapping was carried out to form the fiber layer, the plant functional PP spunbonded non-woven fabric was obtained by hot rolling with the knurling roller. The hot rolling temperature was 160 °C, and the PP fiber non-woven fabric having longitudinal and horizontal breaking strength ratio of 5.41 was obtained

### Example 9

A preparation method of a plant functional PP spunbonded non-woven fabric in example 4 comprises:

### Step 1, modification and preparation of plant functional PP masterbatches:

The polypropylene resin was heated to be molten at 200 °C. Firstly, an antioxidant was added into the molten polypropylene resin and stirred for 13 minutes at the rotation speed of 800 rad/min to fully mix various components. Then, the modifier and the water-soluble plant extract were added and uniformly mixed, then cooled to 185 ~ 187°C and mixed for 20~25 minutes at high speed to obtain the mixed material. Finally, extrusion and pelleting was carried out to obtain plant functional polypropylene masterbatches.

The antioxidant comprises dihydrotanshinone I, epicatechin and glycerinum; the mass ratio of dihydrotanshinone I to epicatechin to glycerinum in the antioxidant was 5:1:3; the modifier comprises pancreatic bleaching T and cocoamidopropyl betaine; the mass ratio of pancreatic bleaching T to cocoamidopropyl betaine in the modifier was 0.1:3;
the mass ratio of the modifier to the water-soluble plant extract is 0.1:10.

### Step 2: mixing

The plant functional polypropylene masterbatches prepared in step 1 were mixed and molten with purchased polypropylene raw materials in accordance with a mass ratio of the soluble plant extract in the plant functional polypropylene masterbatches to total raw materials of 1.2%, so as to prepare spinning melt.

### Step 3: spinning and posttreatment

After the mixed raw materials prepared in step 2 were extruded and melted by a screw extruder, the melt was extruded from the spinning mouth by the spunbonded method. The diameter of the spinning mouth was 12 µm, and the PP fiber bundles were obtained;
the PP fiber bundle obtained in step 3 was pulled, netted with mesh curtain, rolling pressed, hot rolled, wound, rewound and cut-to-length, and finally the finished product was put into storage.

The fiber subjected to extraction was oiled: the oil agent comprises polyvinylpyrrolidone and emulsified silicone oil; the mass ratio of polyvinylpyrrolidone to emulsified silicone oil in the oil agent was 1:3.

The rolling press temperature was 155-156°C, the pressure was 56-60 d/cm, and the hot rolling temperature was 160°C;
mixed lapping was carried out to form the fiber layer, the plant functional PP spunbonded non-woven fabric was obtained by hot rolling with the knurling roller. The hot rolling temperature was 160°C, and the PP fiber non-woven fabric having longitudinal and horizontal breaking strength ratio of 5.89 was obtained.

### Example 10

A preparation method of a plant functional PP spunbonded non-woven fabric in example 5 comprises:

### Step 1, modification and preparation of plant functional PP masterbatches:

The polypropylene resin was heated to be molten at 200 °C. Firstly, an antioxidant was added into the molten polypropylene resin and stirred for 13~15 minutes at the rotation speed of 800 rad/min to fully mix various components. Then, the modifier and the water-soluble plant extract were added and uniformly mixed, then cooled to 186 ~ 188°C and mixed for 20 minutes at high speed to obtain the mixed material. Finally, extrusion and pelleting was carried out to obtain plant functional polypropylene masterbatches.

The antioxidant comprises dihydrotanshinone I, epicatechin and glycerinum; the mass ratio of dihydrotanshinone I to epicatechin to glycerinum in the antioxidant was 4:3:6; the modifier comprises pancreatic bleaching T and cocoamidopropyl betaine; the mass ratio of pancreatic bleaching T to cocoamidopropyl betaine in the modifier was 1:1;
the mass ratio of the modifier to the water-soluble plant extract was 0.5:8.

### Step 2: mixing

The plant functional polypropylene masterbatches prepared in step 1 were mixed and molten with purchased polypropylene raw materials in accordance with a mass ratio of the soluble plant extract in the plant functional polypropylene masterbatches to total raw materials of 1.5%, so as to prepare spinning melt.

### Step 3: spinning and posttreatment

After the mixed raw materials prepared in step 2 were extruded and melted by a screw extruder, the melt was extruded from the spinning mouth by the spunbonded method. The diameter of the spinning mouth was 20 µm, and the PP fiber bundles were obtained;
the PP fiber bundle obtained in step 3 was pulled, netted with mesh curtain, rolling pressed, hot rolled, wound, rewound and cut-to-length, and finally the finished product was put into storage.

The fiber subjected to extraction was oiled: the oil agent comprises polyvinylpyrrolidone and emulsified silicone oil; the mass ratio of polyvinylpyrrolidone to emulsified silicone oil in the oil agent was 2:9.

The rolling press temperature was 160-162°C, the pressure was 60-62d/cm, and the hot rolling temperature was 165-1167°C;
mixed lapping was carried out to form the fiber layer, the plant functional PP spunbonded non-woven fabric was obtained by hot rolling with the knurling roller. The hot rolling temperature was 160 ~ 162°C, and the PP fiber non-woven fabric having longitudinal and horizontal breaking strength ratio of 6.14 was obtained.

### Comparative examples 11-15

Only the oiling step in step 3 was deleted under the condition that other processes were kept unchanged by respectively using the preparation methods of examples 6-10.

### Comparative examples 16-18

Only the step of adding the antioxidant was deleted under the condition that other processes were kept unchanged by respectively using the preparation methods of examples 6-10.

### Comparative examples 19-20

Only the step of adding the modifier was deleted under the condition that other processes were kept unchanged by respectively using the preparation methods of examples 6-10.

### Comparative examples 21-25

By respectively using the preparation methods of examples 6-10 , under the condition that other processes were kept unchanged, the addition amount of plant herbal water-soluble extract was changed to 0.05%, 0.1%, 1.6%, 1.8% and 2.0%, respectively.

The plant herbal water-soluble extracts in examples 1-10 can be honeysuckle extract, peppermint extract, mugwort extract, Echinacea polyphenols, apple extract, rose extract, coralline extract, raspberry extract, mulberry extract, cinnamon extract, ginger extract, angelica extract and the like, of course, can also be other plant herbal water-soluble extracts.

The plant functional PP spunbonded non-woven fabric prepared by the disclosure has good mechanical properties and softness. The mechanical properties and softness (gram weights are consistent) of the plant functional PP spunbonded non-woven fabric prepared by the disclosure are tested by using "FZ T64004-93 thin adhesive non-woven fabric" and "GB-T 8942-2002 paper softness assessment". See Table 1.

| Examples | Horizontal lapping | | Softness and smoothness | Longitudinal and horizontal strength ratio |
|---|---|---|---|---|
| | Longitudinal N | Horizontal N | mN | |
| Example 6 | 28.9 | 4.8 | 17 | 6.02 |
| Example 7 | 27.1 | 5.2 | 14 | 5.21 |
| Example 8 | 26.5 | 4.9 | 15 | 5.41 |
| Example 9 | 26.0 | 4.5 | 15 | 5.89 |
| Example 10 | 25.8 | 4.2 | 22 | 6.14 |
| Comparative example 11 | 28.9 | 4.8 | 11 | 6.02 |
| Comparative example 12 | 27.1 | 5.2 | 10 | 5.21 |
| Comparative example 13 | 26.5 | 4.9 | 9 | 5.41 |
| Comparative example 14 | 26.0 | 4.5 | 9 | 5.89 |
| Comparative example 15 | 25.8 | 4.2 | 12 | 6.14 |

By comparing comparative examples 11-15 with examples 16-20, it can be seen that Table can conclude that under the condition of the same gram weight and the same longitudinal and horizontal breaking strength ratio, the softness of the non-woven fabric prepared by examples 6-10 is increased by more than 100%. Therefore, the biggest related factor of the strength and softness of the plant functional PP spunbonded non-woven fabric prepared by the disclosure is associated with the addition of PVP and emulsified silicone oil in the spinning solution before spinning in addition to the change brought by the structure itself. In particular, PVP and emulsified silicone oil are added in example 10, wherein the plant functional PP spunbonded non-woven fabric prepared by the preparation process in which the mass ratio of PVP to emulsified silicone oil is 2:9 has the best softness and proper strength. As medical non-woven fabric, the softness is an important measurement index, and therefore via comprehensive consideration, example 10 is the best example of the disclosure.

The air permeability, moisture regain and pattern color of the plant functional PP spunbonded non-woven fabric from examples 11 to 20 were observed and tested. The air permeability of materials is tested according to ISO9073-15 standard, and the moisture regain is tested by public determined moisture regain test. The pattern color is compared. The results are shown in Table 1

**Table 2 Performance test results of plant functional PP spunbonded non-woven fabrics in examples 16-20**

| | Water-soluble plant extract content (%) | Permeability /mm/s | Moisture retain (%) | Coloring degree |
|---|---|---|---|---|
| Example 6 | 0.2 | 958 | 0.4 | Homogenous |
| Example 7 | 0.6 | 964 | 1.1 | Homogenous |
| Example 8 | 1.0 | 968 | 1.6 | Homogenous |
| Example 9 | 1.2 | 975 | 2.0 | Homogenous |
| Example 10 | 1.5 | 978 | 2.6 | Homogenous |
| Comparative example 16 | 0.2 | 957 | 0.4 | Flow color |
| Comparative example 17 | 0.6 | 966 | 1.1 | Flow color |
| Comparative example 18 | 1.0 | 970 | 1.6 | Flow color |
| Comparative example 19 | 1.2 | 974 | 1.3 | homogenous |
| Comparative example 20 | 1.5 | 980 | 1.7 | Homogenous |

It can be seen from the results in Table 2 that the plant functional PP spunbonded non-woven fabric of the disclosure has good air permeability and moisture absorption.

Of course, because the modifier and the water-soluble plant extract are added at the same time, and the plant extract, modifier and polypropylene raw materials have relatively fixed mass ratio, which not only meet the basic physical properties of the prepared PP non-woven fabric, but also has the moisture absorption characteristics, and reduces the production cost to the greatest extent. Via considering comprehensively, 0.2-1.5% of plant herbal water-soluble extract of plant is the most appropriate.

It can be seen from the results of examples 16-18 in Table 2 that the addition of antioxidant has great influence on the coloration of the plant functional PP spunbonded non-woven fabric prepared by the disclosure. The function of the antioxidant is mainly to prevent the discoloration of the water-soluble plant extract when being added into the high-temperature polypropylene; in this step, in the melting process of the polypropylene, the antioxidant is added first and then the modifier is added, for reasons that since the antioxidant was added in the initial stage, the molten polypropylene fiber has stronger oxidation resistance. When the water-soluble plant extract is added in the later stage, the discoloration of plant extract at high temperature can be better avoided, and the appearance of pattern color is prevented.

Meanwhile, according to the results of comparative examples 19-20, it can be concluded that the denaturant has a great influence on the moisture absorption of the plant functional PP spunbonded non-woven fabric prepared by the disclosure, and the main function of the modifier is to make the added water-soluble plant extract have better dispersion and evenly disperse into the polypropylene melt fluid; at the same time, the characteristics of the cocoamidopropyl betaine after being mixed with the water-soluble plant extract at high temperature make the prepared fiber produce the microporous network structure and allow the prepared polypropylene fiber to have better moisture regain and moisture absorption characteristics.

**Table 3 Detection of related indexes in examples 21-25**

| | Water-soluble plant extract content (%) | Horizontal lapping | Moisture retain (%) |
|---|---|---|---|
| | | Longitudinal N | |
| Example 6 | 0.2 | 28.9 | 0.4 |
| Example 7 | 0.6 | 27.1 | 1.1 |
| Example 8 | 1.0 | 26.5 | 1.6 |
| Example 9 | 1.2 | 26.0 | 2.0 |
| Example 10 | 1.5 | 25.8 | 2.6 |
| Comparative example 21 | 0.05 | 29.2 | 0.03 |
| Comparative example 22 | 0.1 | 27.8 | 0.1 |
| Comparative example 23 | 1.8 | 18.1 | 2.7 |
| Comparative example 24 | 1.9 | 17.6 | 2.9 |
| Comparative example 25 | 2.0 | 17.5 | 3.0 |

The moisture regain rate of the plant functional PP spunbonded non-woven fabric prepared by the disclosure has moisture regain rate of 0.2-3%, longitudinal breaking strength of ≥ 18.5N/5cm, and longitudinal breaking force of ≤ 9.5N/5cm.

It can be seen from table 3 that when the content of the water-soluble plant extract in the plant functional PP spunbond non-woven fabric prepared by the disclosure is < 0.2%, the moisture regain is too low, and there is basically no value for moisture absorption and further application; when the content of water-soluble plant extract is >1.5%, the physical strength of the prepared non-woven fabric is too low (less than normal value by 20% on average), 0.2% ~ 1.5% is preferred.

## Claims

1. A plant functional PP spunbonded non-woven fabric, comprising the PP spunbonded non-woven fabric contains 0.2-1.5% of water-soluble polyphenol plant extract.

2. The plant functional PP spunbonded non-woven fabric according to claim 1, wherein the plant functional PP spunbonded non-woven fabric has moisture regain of 0.2-3%, longitudinal breaking strength of ≥ 18.5N/5cm and longitudinal breaking force of ≤(9.5N/5cm.

3. A method for preparing a plant functional PP spunbonded non-woven fabric, comprising modification and preparation steps of plant functional PP masterbatches, the steps comprising: heating polypropylene resin to be molten, first adding an antioxidant, and then adding a water-soluble polyphenol plant extract and a modifier for improving the dispersion of the plant extract in the molten PP resin.

4. The method for preparing the Plant functional PP spunbonded non-woven fabric according to claim 3, wherein the melting temperature is 195-220°C; after the antioxidant is added, stirring is carried out for 10-15 min at the rotation speed of 800-1000 rad/min; then the modifier and the water-soluble plant extract are added and mixed for 20-40 min at a high speed, and then cooled to 180-190°C.

5. The method for preparing the plant functional PP spunbonded non-woven fabric according to claim 3, wherein the antioxidant comprises dihydrotanshinone I, epicatechin and glycerinum.

6. The method for preparing the plant functional PP spunbonded non-woven fabric according to claim 3, wherein the mass ratio of dihydrotanshinone I to epicatechin to glycerinum in the antioxidant is 1-5: 1-3: 3-10.

7. The method for preparing the plant functional PP spunbonded non-woven fabric according to claim 3, wherein the modifier comprises sodium-N-methyl-N-oleyl taurate and cocoamidopropyl betaine; the mass ratio of sodium-N-methyl-N-oleyl taurate to cocoamidopropyl betaine in the modifier is 0.1-0.5:0.5-3.

8. The plant functional PP spunbonded non-woven fabric according to any one of claims 1 or 2, wherein the plant functional PP spunbonded non-woven fabric has the thickness of 0.2-0.5 mm, gram weight of 20-40g/m² and pp fiber diameter of 10-30 µm.

## Patentansprüche

1. Pflanzenfunktioneller PP-Spinnvliesstoff, wobei der PP-Spinnvliesstoff 0,2-1,5 % wasserlöslichen Polyphenol-Pflanzenextrakt enthält.

2. Pflanzenfunktioneller PP-Spinnvliesstoff nach Anspruch 1, wobei der pflanzenfunktionelle PP-Spinnvliesstoff eine Feuchtigkeitsaufnahme von 0,2-3 %, eine Reißfestigkeit in Längsrichtung von ≥18,5 N/5 cm und eine Reißkraft in Längsrichtung von ≤9,5 N/5 cm aufweist.

3. Verfahren zur Herstellung eines pflanzenfunktionellen PP-Spinnvliesstoffs, umfassend Modifizierungs- und Herstellungsschritte von pflanzenfunktionellen PP-Masterbatches, wobei die Schritte umfassen: Erhitzen von Polypropylenharz zu schmelzendem, zuerst Zugabe eines Antioxidans und dann Zugabe einer wasserlöslichen Polyphenol-Pflanzenextrakt und ein Modifizierungsmittel zum Verbessern der Verteilung des Pflanzenextrakts in dem geschmolzenen PP-Harz.

4. Verfahren zur Herstellung des pflanzenfunktionellen PP-Spinnvliesstoffs nach Anspruch 3, wobei die Schmelztemperatur 195-220°C beträgt; nach Zugabe des Antioxidans wird 10-15 min lang bei einer Rotationsgeschwindigkeit von 800-1000 rad/min gerührt; dann werden das Modifizierungsmittel und der wasserlösliche Pflanzenextrakt zugegeben und für 20-40 min bei hoher Geschwindigkeit gemischt und dann auf 180-190°C abgekühlt.

5. Verfahren zur Herstellung des pflanzenfunktionellen PP-Spinnvliesstoffs nach Anspruch 3, wobei das Antioxidans Dihydrotanshinon I, Epicatechin und Glycerin umfasst.

6. Verfahren zur Herstellung des pflanzenfunktionellen PP-Spinnvliesstoffs nach Anspruch 3, wobei das Massenverhältnis von Dihydrotanshinon I zu Epicatechin zu Glycerin im Antioxidans 1-5: 1-3: 3-10 beträgt.

7. Verfahren zur Herstellung des pflanzenfunktionellen PP-Spinnvliesstoffs nach Anspruch 3, wobei das Modifizierungsmittel Natrium-N-methyl-N-oleyltaurat und Cocoamidopropylbetain umfasst; das Massenverhältnis von Natrium-N-methyl-N-oleyltaurat zu Cocoamidopropylbetain im Modifizierungsmittel beträgt 0,1-0,5:0,5-3.

8. Pflanzenfunktioneller PP-Spinnvliesstoff nach Anspruch 1 oder Anspruch 2, wobei der pflanzenfunktionelle PP-Spinnvliesstoff eine Dicke von 0,2-0,5 mm, ein Flächengewicht von 20-40 g/m² und einen PP-Faserdurchmesser von 10-30 µm aufweist.

## Revendications

1. Tissu non-tissé spunbond en pp à fonction végétale, dans lequel le tissu non-tissé spunbond en pp à fonction végétale contient 0,2 à 1,5 % d'extrait végétal de polyphénol hydrosoluble.

2. Tissu non-tissé spunbond en pp à fonction végétale selon la revendication 1, dans lequel le tissu non-tissé spunbond en pp à fonction végétale a une reprise d'humidité de 0,2 à 3 %, une résistance à la rupture longitudinale de ≥18,5 N/5 cm et une force de rupture longitudinale de ≤9,5 N/5 cm.

3. Procédé de préparation d'un tissu non-tissé spunbond en pp à fonction végétale, comprenant des étapes de modification et de préparation de masterbatches de PP à fonction végétale, les étapes comprenant : le chauffage de la résine de polypropylène à faire fondre, l'ajout d'abord d'un antioxydant, puis l'ajout d'un l'extrait hydrosoluble de plante de polyphénol et d'un modificateur pour améliorer la dispersion de l'extrait végétal dans le résine PP fondue.

4. Procédé de préparation d'un tissu non-tissé spunbond en pp à fonction végétale selon la revendication 3, dans lequel la température de fusion est de 195-220°C ; après addition de l'antioxydant, l'agitation est effectuée pendant 10-15 min à une vitesse de rotation de 800-1000 rad/min; puis le modificateur et l'extrait hydrosoluble de plante de polyphénol sont ajoutés et mélangés pendant 20-40 min à grande vitesse, puis refroidis à 180-190'C.

5. Procédé de préparation d'un tissu non-tissé spunbond en pp à fonction végétale selon la revendication 3, dans lequel l'antioxydant comprend de la dihydrotanshinone I, de l'épicatéchine et du glycérol.

6. Procédé de préparation d'un tissu non-tissé spunbond en pp à fonction végétale selon la revendication 3, dans lequel le rapport massique de la dihydrotanshinone I à l'épicatéchine au glycérine dans l'antioxydant est de 1 - 5 : 1 -3 : 3-10.

7. Procédé de préparation d'un tissu non-tissé spunbond en pp à fonction végétale selon la revendication 3, dans lequel le modificateur comprend du taurate de sodium-N-méthyl-N-oléyle et de la cocoamidopropyl bétaïne; le rapport massique du N-méthyl-N-oléyl taurate de sodium à la cocoamidopropyl bétaïne dans le modificateur est de 0,1-0,5 : 0,5-3.

8. Tissu non-tissé spunbond en pp à fonction végétale selon l'une quelconque des revendication 1 ou 2, dans lequel le tissu non-tissé spunbond en pp à fonction végétale a une épaisseur de 0,2 à 0,5 mm, un poids en grammes de 20 à 40 g/m' et un diamètre de fibre en pp de 10 à 30 µm.
